# EUROPEAN PATENT SPECIFICATION

(11) **EP 2 903 238 B1**
(45) Date of publication and mention of the grant of the patent: **15.01.2020**
(21) Application number: 15153573.9
(22) Date of filing: 03.02.2015
(51) Int. Cl.: H04L 29/06, H04L 12/701

(54) **A ROUTER-BASED HONEYPOT FOR DETECTING ADVANCED PERSISTENT THREATS**
ROUTER-BASIERTER HONIGTOPF ZUR ERKENNUNG VON FORTSCHRITTLICHEN PERSISTENTEN BEDROHUNGEN
POT DE MIEL BASÉ SUR UN ROUTEUR PERMETTANT DE DÉTECTER DES MENACES PERSISTANTES AVANCÉES

(30) Priority: 03.02.2014 IL 23080014
(43) Date of publication of application: 05.08.2015
(73) Proprietor: Deutsche Telekom AG, 53113 Bonn (DE)
(72) Inventor: Elovici, Yuval, 79864 Arugot (IL); Shabtai, Asaf, 7400442 Ness Ziona (IL); Peylo, Christoph, 49041 Damme (DE)
(74) Representative: Perani & Partners S.p.A.

(56) References cited:
- US-A1- 2006 242 701
- US-A1- 2012 023 572
- GHOURABI A ET AL: "Data analyzer based on data mining for Honeypot Router", COMPUTER SYSTEMS AND APPLICATIONS (AICCSA), 2010 IEEE/ACS INTERNATIONAL CONFERENCE ON, IEEE, PISCATAWAY, NJ, USA, 16 May 2010 (2010-05-16), pages 1-6, XP031764303, ISBN: 978-1-4244-7716-6
- ABDALLAH GHOURABI ET AL: "Honeypot router for routing protocols protection", RISKS AND SECURITY OF INTERNET AND SYSTEMS (CRISIS), 2009 FOURTH INTERNATIONAL CONFERENCE ON, IEEE, PISCATAWAY, NJ, USA, 19 October 2009 (2009-10-19), pages 127-130, XP031627000, ISBN: 978-1-4244-4498-4

## Description

### Field of the Invention

The present invention relates to the field of cyber-attack detection. More particularly, the invention relates to a router-based honeypot for detecting advanced persistent threats.

### Background of the Invention

As cyber-attacks are becoming more and more sophisticated, one of the main targets of an attacker is network devices. As part of the attack, an attacker may try to modify the configuration of network devices (e.g., routers, switches, etc.), in order to access, modify or redirect traffic of interest or interfering with various services supported by the device (e.g., Denial of Service). Detecting such an attack is a complex task, since in many cases it does not create any observable anomalies, or since the attacker launches a highly sophisticated attack (thereby gaining full control) that allows him/her to hide evidence.

Many internet routers and switches that form the basic infrastructure of the net, and are largely overlooked as security vulnerabilities. This includes not only installing covert "implants" in foreign desktop computers but also on routers and firewalls Hacking routers is an ideal way for an intelligence or military agency to maintain a persistent hold on network traffic because the systems aren't updated with new software very often or patched in the way that Windows and Linux systems are.

Network routers are hardly updated since the networking equipment is too critical, as usually it does not have redundancy to be done properly. Also, routers don't have security software that can help detecting a breach.

Ubiquitous router vulnerabilities are difficult to find since there are so many different configurations for routers, and an attack that works against one router configuration might not work for another. But a vulnerability that affects the core operating system is much more valuable since it is less likely to be dependent on the configuration. Once a vulnerability becomes known to the software maker and is patched, it loses a lot of its value. But because many users and administrators do not patch their systems, some vulnerabilities can be used effectively for years, even after a patch is available. The Conficker worm, for example, continued to infect millions of computers long after Microsoft released a patch that should have stopped the worm from spreading.

In order to study the activities of network attackers and to monitor how they are able to access a server, many network administrators employ a honeypot having a reduced security level to lure potential attackers to the network. A prior art honeypot is a virtual server that emulates a real server, being provided with real data, applications and other types of functionality which convince network users that it is a legitimate server even though the honeypot is actually isolated from the network. After an attacker attempts to compromise the honeypot, attack-related information such as the IP address of the attacker can be collected. Also, the administrator can determine the attacking technique, to learn the vulnerabilities of the network that lead to the security breach. Furthermore, the attacker can be apprehended while attempting to access the network through the honeypot.

Such a honeypot system is described, for example, in US 2012/023572, where a honeypot simulates a complete network, therefore attracting intruders and enabling information gathering to help trace and identify the source of intrusion.

A system for preventing auditing and trending unauthorized traffic in network systems is described in US 2006/024701, where a honeypot located inside a network router tracks attack attempts.

Due to the prevalence of honeypots and other security protection modules such as firewalls, attackers have very limited access to servers. Consequently, attackers have recently attempted to access a network via a router or other network devices. By reconfiguring a router, an attacker can redirect traffic of interest to a specific location and thereby access sensitive information. As a router has dedicated hardware and software to direct data packets from one data network to another despite the high data volume that passes through, a router-based honeypot would have to be able to operate sufficiently quickly and according to an expected reconfiguration process to make an attacker lured to the honeypot believe that a real router has been accessed.

"Honeypot router for routing protocols protection" by Ghourabi A. et al., published in Risks and Security of Internet and Systems (CRiSIS), 2009 Fourth International Conference on 19-22 Oct. 2009, pages 127-130, discloses a router honeypot for detecting routing configuration attacks.

"Data analyzer based on data mining for honeypot router" by Ghourabi A. et al., published in Computer Systems and Applications (AICCSA), 2010 IEEE/ACS International Conference, 16-19 May 2010, pages 1-6, decribes a data analysis tool based on data mining clustering for a honeypot router.

It is an object of the present invention to provide a router-based honeypot that can accurately and reliably detect an attempt to reconfigure a router.

It is an additional object of the present invention to provide a router-based honeypot for sufficiently emulating a router to convince an attacker that a real network router has been accessed.

Other objects and advantages of the invention will become apparent as the description proceeds.

### Summary of the Invention

The present invention provides a router-based honeypot system, comprising a network router, a proxy component for intercepting all data traffic intended for, or returned from, said router, and a honeypot in data communication with said proxy component, wherein a processor associated with said proxy component is operable to analyze the data being transmitted to said router and to forward the same to said honeypot if found to be non-legitimate.

The proxy component may be transparent to attackers and disposed closer to network edges than the router, and may be adapted to decide whether not to interfere with the normal communication channels between a client device and the router, according to predetermined rules stored in the processor.

The present invention is also directed to a router-based honeypot system, comprising a network router, and a behavioral network device honeypot in data communication with said router which is operable to obtain updated router configuration data, to obtain monitored router behavior, and to obtain data indicative of a comparison between expected router behavior in response to said obtain updated router configuration data and said monitored router behavior.

The expected behavior of a router with a given configuration may be derived, based on a pre-defined network device ontology that represents possible behavior or activities or capabilities of a network component.

The operating behavioral network device honeypot may interface with the router by the following channels:
a configuration interface channel for receiving the instantaneous router configuration;
a data sampling channel for sampling control data, directed to the router;
a monitoring channel for extracting data relating to the router's behavior in response to the sampled incoming data;
a bypass channel through which all control data normally directed to the router is bypassed to the behavioral network device honeypot, if it is determined that the router's behavior is incompatible with the expected router behavior for the instantaneous router configuration.

The router based honeypot system may further comprise:
a network asset management system for transmitting configuration changes of the router to the behavioral network device honeypot using legitimate credentials from an Active Directory;
a trusted monitoring component for:
   monitoring the router's behavior; and
   comparing the router's behavior with the expected router behavior for the instantaneous router configuration, in response to sampled incoming data.

An external server may be used to compare the monitored router behavior with the expected router behavior, such that the behavioral network device honeypot receives control data via the bypass channel after an anomaly has been detected.

The router based honeypot system may further comprise an injection channel, through which the behavioral network device honeypot transmits virtual data simulated thereby to router, where each data item is identifiable, and an expected router reaction in response to the simulated data item and in response to the instantaneous router configuration is compared with the monitored router reaction, to determine an occurrence of an anomaly event.

### Brief Description of the Drawings

In the drawings:
- Fig. 1 is a schematic illustration of a methodological process for conducting an attack;
- Fig. 2 is a block diagram of a typical network router honeypot;
- Fig. 3 is a schematic illustration of a router based honeypot system, according to one embodiment of the present invention;
- Fig. 4 is a schematic illustration of predefined network device ontology for deriving expected behavior of a router;
- Fig. 5 is a method for detecting router anomalies; and
- Figs. 6-8 are three schematic illustrations of a router based honeypot system, according to three embodiments of the invention, respectively.

### Detailed Description of Preferred Embodiments

The present invention is a system and method for luring attackers to a honeypot associated with a network device such as a router.

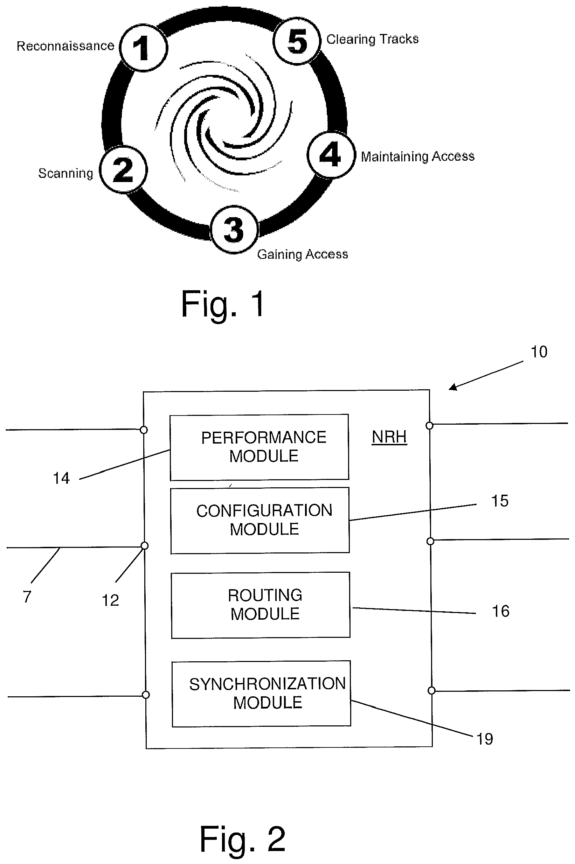

Advanced Persistent Threats (APTs) for maintaining long-term access to targeted sensitive information of an organization usually follow a methodological process for conducting an attack on a network router. As shown in Fig. 1, this process includes the following main steps: Reconnaissance, Scanning, Gaining Access, Attack and Access Maintenance, and Covering tracks.

Detecting an APT at Reconnaissance Phase 1 is almost impossible since the activity is usually performed externally to the organization. At some point, the reconnaissance activity continues at an entry point to the organization during the next phases. During Scanning Phase 2, the attacker/APT scans the organization's infrastructure in order to detect live routers, uncover open ports and reveal running services and potential vulnerabilities. Detection at Scanning Phase 2 is very challenging since it is not clear where to monitor and detect the scanning activity. During Gaining Access Phase 3, the attacker/APT may interact with the organizational IT components (e.g., Active Directory, servers, routers etc.) in order to extract usernames and passwords that will allow the APT to access various resources without the need to overcome security mechanisms and thus remaining undetectable. Detecting the APT activity at this phase has a great potential. During Maintaining Access Phase 4, the APT will perform the actual attack and in the last phase, Clearing Tracks Phase 5, the attacker attempts to cover its tracks in order to avoid detection and forensics.

APTs may try to modify or reconfigure routers as part of the attack, in order to detect or redirect data traffic of interest. Detecting such an attack is very complex since in many cases it does not create any observable anomalies, or the attacker launches a highly sophisticated attack by gaining full control of the network device to allow evidence of the attack to be hidden. An exemplary reconfiguration operation that is quite beneficial to attackers and that should be preferably detected by a honeypot is the redirection of bank related IP addresses from a secure channel to a non-secure channel, allowing confidential data to be accessed or monitored.

An attacker has two main methods for reconfiguring routers:
(1) The attacker reconfigures the router via a network asset management system or directly by means of the device's regular configuration interface using legitimate credentials acquired in earlier phases of the attack (e.g., compromising Active Directory servers or attacking administrators computers in order to reveal credentials);
(2) Assuming that an existing vulnerability in the device is known (through exploration or by means of a pre-installed component), the attacker can covertly access and reconfigure the router by exploiting the vulnerability.

Since APTs are very sophisticated and incorporate advanced methods for evading current security mechanisms, prior art honeypots deployed at servers will not be able to adequately detect an attempt to compromise a network router. The system of the present invention is advantageously able to detect an APT that attempts to modify the configuration of a network router during the Maintaining Access Phase by means of two alternative types of Network Router Honeypot (NRH) implementations: a proxy-based honeypot and a behavioral-based honeypot.

A plurality of honeypots functioning as traps may be deployed in order to detect an unauthorized attempt to reconfigure a router, which may be part of an APT attack. Each honeypot is configured to function as a real network device, yet it is able to expose many services with known vulnerabilities to an attacker, provide high responsiveness and interaction, and is easy to detect. The honeypots employ trusted monitoring modules and a smart detection engine that will process data in a collected log and will correlate events to detect APT attack attempts.

A block diagram of a typical NRH is illustrated in Fig. 2. NRH 10 comprises a plurality of I/O ports 12 that are virtually connectable to a corresponding data line 7, and a performance module 14 for generating virtual traffic through the plurality of I/O ports 12 so that potential attackers will be led to believe, after receiving performance data, that NRH 10 is a real router. The performance data is also virtually generated by performance module 14, and reflects various parameters associated with the virtual traffic, such as data rate, security level and other statistical information for each virtual data transfer.

NRH 10 also comprises a configuration module 15 for establishing the priority of each virtual data transfer and a routing module 16 for providing a channel allocation for data being virtually transferred through one or more of the I/O ports 12. A default set of rules and a security policy are also stored in configuration module 15. A synchronization module 19 comprising a controller running on an operating system synchronizes the operation of NRH 10, to provide a real-time emulation and response of a real router and to generate a fictitious interface for an attacker accessing and communicating with NRH 10.

Synchronization module 19 may also perform the functions of virtual packet processing, whereby each incoming packet, if incoming data is in the form of packets, appears to be assigned a different target address, prioritized and possibly transmitted to minimize delays between the transmission of two packets so as to maintain a predefined quality of service or to manage data congestion.

Synchronization module 19 is accordingly adapted to respond to queries sent by attackers lured thereby who desire to reconfigure a router linked thereto, in order to initiate a malicious accession operation of security sensitive information. Non-limitating examples of queries to which synchronization module 19 responds, preferably within a similar response time as that of a real router, include queries related to throughput, traffic volume, and a list of addresses to which data has been forwarded. The generated responses are preferably within the expected performance range of a real router.

During interaction with an attacker, such as when responding to an attacker initiated query, NRH 10 is adapted to appear as a genuine router so that the normal and unreserved methodology carried out by the attacker during a malicious accession operation can be monitored and analyzed. Synchronization module 19 can operate in one of three emulation levels: (1) low emulation, (2) medium emulation, and (3) high emulation. Selection of a particular emulation level may provide broader protection for the router associated with the NRH, or may improve understanding of the behavior of an attacker/APT, including the types of information for which the attacker is searching. However, each emulation level is associated with a different implementation complexity. If so desired, more than one NRH may be employed, such that each honeypot has a different emulation level.

In the low emulation level, a real router is deployed at a network location that is attractive to an attacker, for example in terms of the volume of data traffic, security level of the data being transmitted, and vulnerability to attack. The honeypot to which the attacker's data is forwarded on one hand is able to lure a maximum number of attackers, but on the other hand can be easily identified. Such a honeypot is generally installed with known vulnerable firmware and has default port or username configurations. Attackers will generally cease to transmit data to a particular network location after determining that it is being intercepted by a honeypot. Consequently a low emulation level honeypot is generally unmonitorable.

A medium emulation level honeypot is able to lure attackers similarly to a low level emulation honeypot, but appears seemingly real by intelligently generating virtual traffic through its I/O ports. After an attacker attempts to compromise the honeypot, attack-related information may be monitored and analyzed. As an additional tool to receive attack-related information, a honeytoken, or an entity containing digital data to indicate a digital theft event such as a fictitious data entry, e.g. a fictitious email address, provided with a marker, may be implanted within the virtual traffic.

In the high emulation level, the NRH operates in conjunction with a real router that is part of the production network or infrastructure of an organization. The high-emulation NRH is capable of responding to most of the attacker's queries by employing a sophisticated performance module for generating realistic performance data and a high-level synchronization module for coordinating the performance data to realistically respond to the attacker. In the event that the NRH is incapable of responding to a particular query, or will unrealistically respond thereto, the synchronization module will connect to the controller of the real router and receive an accurate response to the query. When a query includes one or more predetermined terms that are indicative of a query that is known to be able to be answered only by a real router, discovery of such terms will trigger an interface operation by which the synchronization module will be connected to the controller of the real router. The synchronization module will then transmit the response to the attacker, while the attacker remains isolated from the real router even though the response seemingly originates from the real router.

Significant network considerations involve deciding as to a proper location for deploying a NRH, how many of them should be deployed, and what should be the right balance between the three emulation types. A decision support methodology may be developed in order to ensure that each NRH will be deployed at a suitable location. A system may be based on a network simulator and implement the following phases: network topology retrieval, typical traffic matrix retrieval, an algorithm for computing the optimal deployment, and a simulation tool for simulating attacks. Optimal deployment may be computed using advanced algorithms that will be developed specifically for this task.

### Proxy-based Network Device Honeypot

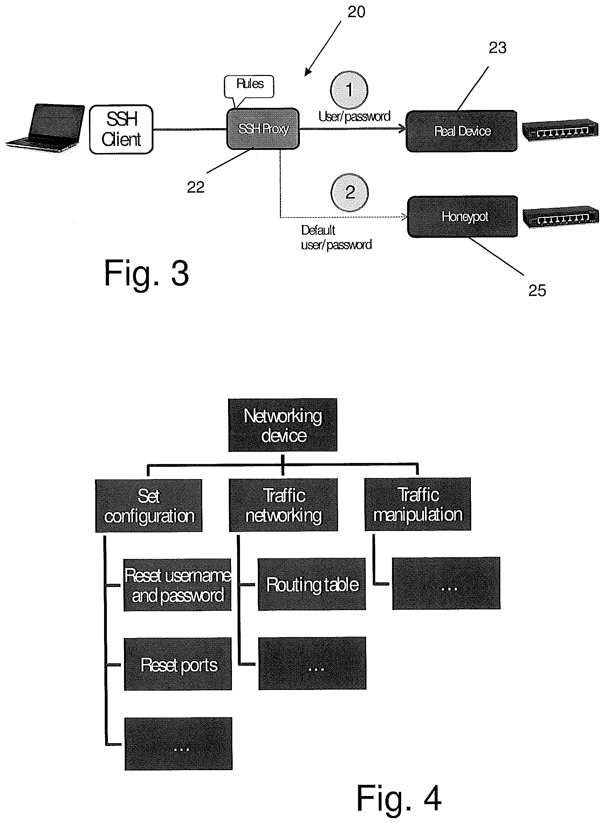

In system 20 illustrated in Fig. 3, honeypot 25 is in data communication with a proxy component 22 for intercepting all data traffic intended for, or returned from, router 23. Proxy 22, which is disposed closer to network edges than router 23, is transparent to attackers. Attackers will therefore continue their attempts to maliciously access router 23 even though the transmitted data has been intercepted since the presence of proxy 22 is unknown to them. A processor associated with proxy 22 analyzes the data traffic being transmitted to router 23. If the traffic is classified as legitimate it will be forwarded to router 23; otherwise, it will be forwarded to honeypot 25.

Predetermined rules stored in the processor help proxy 22 to decide whether not to interfere with the normal communication channels between a client device 21 and router 23, along which data may be transmitted according to the Secure Shell (SSH) Protocol, in order to detect various operational patterns of attackers, or whether the data is clearly indicative of being malicious, for example when there is an attempt to access network device 23 with default credentials, in which case the data is transferred to honeypot 25 in order to become isolated from router 23.

Other indications of an attempt of a malicious router accession operation include a sequential password entering event whereby the password of each of huge number of password entry attempts differs from a previous entry by only one or two characters, an router reconfiguration attempt to reroute data traffic from a secure channel to a non-secure channel which could lead to irreversible damage of calamitous proportions when the secure channel is associated with the IP address of a world renown bank, and the monitoring of data traffic that allows an attacker to view or intercept sensitive information.

### Behavioral-based Network Device Honeypot

A Behavioral Network Device Honeypot (BNDH) is adapted to detect an existing vulnerability or hidden backdoor in the firmware/software of a router, or of any other network device. A backdoor is an installed software component that enables the normal authentication procedures to be bypassed, allowing attackers to subsequently covertly access and reconfigure the router. By monitoring the behavior of a router and comparing its observed behavior with an expected behavior, a BNDH is able to detect reconfiguration or tampering of a router via a hidden channel or backdoor.

The configuration state of a router is able to be continuously monitored in two ways:
(1) tracking configuration changes by a network asset management system using legitimate credentials; and
(2) monitoring network traffic and detecting configuration changes commands.

For each configuration state the system will derive the expected behavior of the router given its current configuration. Derivation of the expected behavior will be based on a pre-defined network device ontology that represents the possible behavior/activities/capabilities of a network component (see example in Fig. 4). This underlying ontology will be the basis for implementing a new specific honeypot. Monitoring layer and traffic emulation will be implemented using the ontology.

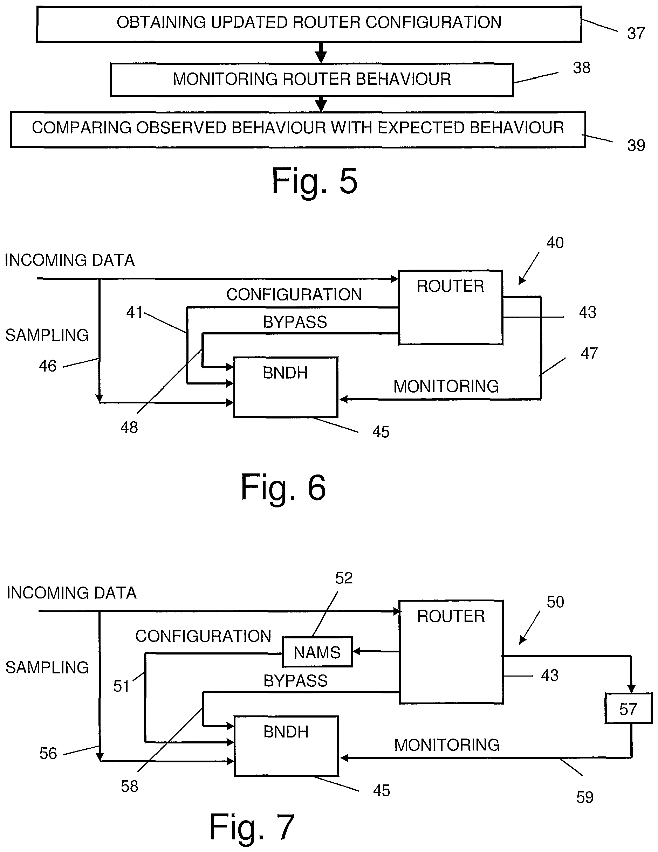

Therefore, a system comprising a BNDH will operate in the three step process shown in Fig. 5. A precondition is obtaining an updated router configuration in step 37. The router configuration may be reported through a one-way firewall that ensures secured and trusted communication, whereupon the BNDH is able to intercept configuration changes, for example through a network asset management system. In step 38, the router behavior is monitored externally to the device at the network level using trusted monitoring technologies. Finally, the observed router behavior is compared with the expected router behavior in step 39, in order to identify anomalies that are not compatible with the known router configuration.

Fig. 6 schematically illustrates a system 40 employing router 43 and BNDH 45. In this embodiment, BNDH 45 interfaces with router 43 by four separate channels: (1) configuration interface channel 41 for receiving the instantaneous router configuration, (2) data sampling channel 46 through which BNDH 45 samples incoming data, preferably control data, directed to router 43, (3) monitoring channel 47 for extracting data relating to the router's behavior in response to the sampled incoming data, and (4) bypass channel 48 through which all control data normally directed to router 43 is bypassed to BNDH 45 if it is determined that the router's behavior is incompatible with the expected router behavior for the instantaneous router configuration.

It will be appreciated that these channels are not physical channels, but rather logic channels, and may be implemented as honeypot related layers.

In Fig. 7, system 50 comprises a network asset management system (NAMS) 52 for transmitting configuration changes of router 43 to BNDH 45 by channel 51 using legitimate credentials from an Active Directory, and a trusted monitoring component 57 for monitoring the router's behavior via channel 59. BNDH 45 compares the router's behavior with the expected router behavior for the instantaneous router configuration in response to the sampled incoming data received in channel 56, and will receive all control data normally directed to router 43 via channel 58 after determining that the router's behavior is incompatible with the expected router behavior for the instantaneous router configuration.

In another embodiment, an external server may compare the monitored router behavior with the expected router behavior, while the BNDH will receive control data via the bypass channel after an anomaly has been detected, indicating that the router was tampered with through an unknown/covert communication channel, for example by an attacker who exploited a vulnerability in the software/firmware of the router.

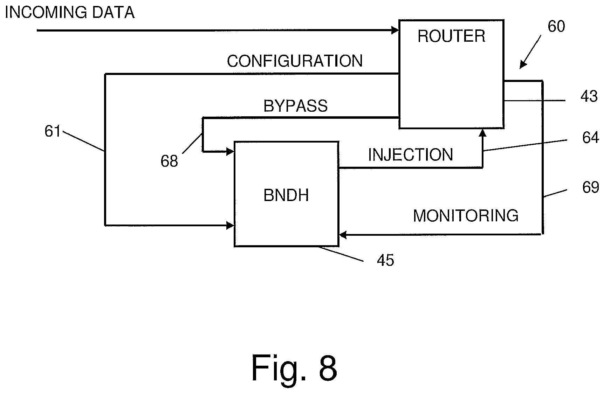

At times, monitoring a real router is difficult due to the amount of data traffic and noise within the traffic. Therefore, in order to provide accurate behavioral monitoring the router may be actively probed by receiving predefined challenges through the monitored network. Thus, instead of monitoring all data traffic passing through the router, or even through a honeypot, e.g. of a medium or high emulation level, active probing allows focusing only on specific low-volume data traffic as probed traffic volume is very low, as compared to production traffic. System 60 shown in Fig. 8 accordingly relies on data traffic that is self-generated for probing purposes, to learn some properties of the router.

The main advantage of probing relative to passive monitoring, i.e. monitoring all real data traffic, is that the self-generated traffic is characterized by a very low variability which is crucial for reliably detecting any modification in configuration.

As shown in Fig. 8, system 60 comprises an injection channel 64 through which BNDH 45 transmits virtual data simulated thereby to router 43. Each data item is identifiable, and an expected router reaction in response to the simulated data item and in response to the instantaneous router configuration is compared with the monitored router reaction to determine an occurrence of an anomaly event.

Examples of probe/challenge types include: ICMP packets, DNS requests, VoIP packets, Neighbor discovery solicitation, Email, and application layer data.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

## Claims

1. A router based honeypot system, comprising:
a) a network router (22);
b) a behavioral network device honeypot (43) in data communication with said router which is operable to obtain updated router configuration data, to obtain monitored router behavior, and to obtain data indicative of a comparison between expected router behavior in response to said obtained updated router configuration data and said monitored router behavior,
***characterized in that,*** said router (22) based honeypot system further comprises:
c) an injection channel (64) through which said behavioral network device honeypot (43) is configured to transmit virtual data, simulated thereby, to said router (22); and
d) means for actively probing said router using said virtual data so as to be specific low-volume and self-generated data traffic, such that each simulated data item in said virtual data is identifiable, and that an expected router reaction in response to the simulated data item and in response to said obtained updated router configuration is compared with the monitored router behavior to determine an occurrence of an anomaly event.

2. A router based honeypot system, according to claim 1, in which the expected behavior of a router with a given configuration is derived, based on a pre-defined network device ontology that represents possible behavior or activities or capabilities of a network component.

3. A router based honeypot system, according to claim 1, in which the operating behavioral network device honeypot interfaces with the router by the following channels:
a configuration interface channel (41) for receiving the instantaneous router configuration;
a data sampling channel (46) for sampling control data, directed to said router;
a monitoring channel (47) for extracting data relating to the router's behavior in response to the sampled incoming data;
a bypass channel (48) through which all control data normally directed to said router is bypassed to said behavioral network device honeypot, if it is determined that the router's behavior is incompatible with the expected router behavior for the instantaneous router configuration.

4. A router based honeypot system, according to claim 3, in which the configuration interface channel (41), data sampling channel (46), monitoring channel (47) and bypass channel (48) are logic channels.

5. A router based honeypot system, according to claim 1, further comprising:
a network asset management system (52) for transmitting configuration changes of the router to the behavioral network device honeypot using legitimate credentials from an Active Directory;
a trusted monitoring component (57) for:
monitoring the router's behavior;
comparing the router's behavior with the expected router behavior for the instantaneous router configuration, in response to sampled incoming data.

6. A router based honeypot system, according to claim 1, in which an external server is used to compare the monitored router behavior with the expected router behavior, such that the behavioral network device honeypot receives control data via the bypass channel after an anomaly has been detected.

7. A router based honeypot system, according to claim 1, in which the means for actively probing said router using said virtual data is a performance module (14) of the behavioral network device honeypot (43) which is also adapted to generate the virtual data.

8. A router based honeypot system, according to claim 1, in which the means for actively probing said router using said virtual data comprises means for probing by predefined challenges related to the specific low-volume and self-generated data traffic.

9. A router based honeypot system, according to claim 8, in which probe or challenge data types constituting the specific low-volume and self-generated data traffic are selected from the group consisting of ICMP packets, DNS requests, VoIP packets, Neighbor discovery solicitation, Email and application layer data.

## Patentansprüche

1. Router-basiertes Honeypot-System, umfassend:
a) einen Netzwerk-Router (22),
b) einen Verhaltensnetzwerkgeräte-Honeypot (43) in Datenkommunikation mit dem Router, der betreibbar ist, um aktualisierte Router-Konfigurationsdaten zu erhalten, um überwachtes Router-Verhalten zu erhalten und um Daten zu erhalten, die einen Vergleich zwischen dem erwarteten Router-Verhalten als Reaktion auf die erhaltenen aktualisierten Router-Konfigurationsdaten und das überwachte Router-Verhalten anzeigen,
***dadurch gekennzeichnet, dass*** das Router- (22) basierte Honeypot-System ferner Folgendes umfasst:
c) einen Injektionskanal (64), durch den der Verhaltensnetzwerkgeräte-Honeypot (43) eingerichtet ist, um virtuelle Daten, die dadurch simuliert werden, an den Router (22) zu übertragen,
und
d) ein Mittel zum aktiven Abtasten des Routers unter Verwendung der virtuellen Daten, um einen spezifischen, niedrigvolumigen und selbst erzeugten Datenverkehr zu gewährleisten, so dass jedes simulierte Datenelement in den virtuellen Daten identifizierbar ist, und dass eine erwartete Routerreaktion als Reaktion auf das simulierte Datenelement und als Reaktion auf die erhaltene aktualisierte Routerkonfiguration mit dem überwachten Routerverhalten verglichen wird, um ein Auftreten eines Anomalieereignisses zu bestimmen.

2. Router-basiertes Honeypot-System nach Anspruch 1, in dem das erwartete Verhalten eines Routers mit einer gegebenen Konfiguration abgeleitet wird, basierend auf einer vordefinierten Netzwerkgeräteontologie, die mögliches Verhalten oder Aktivitäten oder Fähigkeiten einer Netzwerkkomponente darstellt.

3. Router-basiertes Honeypot-System nach Anspruch 1, bei dem der Verhaltensnetzwerkgeräte-Honeypot über die folgenden Kanäle mit dem Router verknüpft ist:
einen Konfigurationsschnittstellenkanal (41) zum Empfangen der augenblicklichen Router-Konfiguration,
einen auf den Router gerichteten Datenabtastkanal (46) zum Abtasten von Kontrolldaten,
einen Überwachungskanal (47) zum Extrahieren von Daten, die sich auf das Verhalten des Routers als Reaktion auf die abgetasteten eingehenden Daten beziehen,
einen Bypass-Kanal (48), durch den alle Kontrolldaten, die normalerweise an den Router gerichtet sind, an den Verhaltensnetzwerkgeräte-Honeypot umgeleitet werden, wenn bestimmt wird, dass das Verhalten des Routers mit dem erwarteten Router-Verhalten für die augenblickliche Router-Konfiguration inkompatibel ist.

4. Router-basiertes Honeypot-System nach Anspruch 3, bei dem der Konfigurationsschnittstellenkanal (41), der Datenabtastkanal (46), der Überwachungskanal (47) und der Bypasskanal (48) Logikkanäle sind.

5. Router-basiertes Honeypot-System nach Anspruch 1, ferner umfassend: ein Netzwerk-Asset-Management-System (52) zum Übertragen von Konfigurationsänderungen des Routers an den Verhaltensnetzwerkgeräte-Honeypot unter Verwendung legitimer Anmeldeinformationen aus einem Active Directory,
eine vertrauenswürdige Überwachungskomponente (57) für:
Überwachen des Verhaltens des Routers,
Vergleichen des Verhaltens des Routers mit dem erwarteten Routerverhalten für die augenblickliche Routerkonfiguration als Reaktion auf abgetastete eingehende Daten.

6. Router-basiertes Honeypot-System nach Anspruch 1, bei dem ein externer Server verwendet wird, um das überwachte Router-Verhalten mit dem erwarteten Router-Verhalten zu vergleichen, so dass der Verhaltensnetzwerkgeräte-Honeypot Kontrolldaten über den Bypasskanal erhält, nachdem eine Anomalie erkannt wurde.

7. Router-basiertes Honeypot-System nach Anspruch 1, bei dem das Mittel zum aktiven Abtasten des Routers unter Verwendung der virtuellen Daten ein Leistungsmodul (14) des Verhaltensnetzwerkgeräte-Honeypots (43) ist, das auch zum Erzeugen der virtuellen Daten geeignet ist.

8. Router-basiertes Honeypot-System nach Anspruch 1, bei dem das Mittel zum aktiven Abtasten des Routers unter Verwendung der virtuellen Daten ein Mittel zum Abtasten durch vordefinierte Herausforderungen im Zusammenhang mit dem spezifischen, niedrigvolumigen und selbst erzeugten Datenverkehr umfasst.

9. Router-basiertes Honeypot-System nach Anspruch 8, bei dem Probe- oder Challenge-Datentypen, die den spezifischen, niedrigvolumigen und selbst generierten Datenverkehr bilden, aus der Gruppe bestehend aus ICMP-Paketen, DNS-Anfragen, VoIP-Paketen, Neighbor Discovery Solicitation, E-Mail- und Anwendungsdaten ausgewählt sind.

## Revendications

1. Système pot de miel (honeypot) basé sur routeur, comprenant :
a) un routeur de réseau (22) ;
b) un pot de miel de dispositif de réseau comportemental (43) en communication de données avec ledit routeur qui est utilisable pour obtenir des données de configuration de routeur mise à jour, pour obtenir un comportement de routeur surveillé, et pour obtenir des données indicatives d'une comparaison entre un comportement de routeur prévu en réponse auxdites données de configuration de routeur mise à jour obtenues et ledit comportement de routeur surveillé,
***caractérisé en ce que*** ledit système pot de miel basé sur routeur (22) comprend en outre :
c) un canal d'injection (64) à travers lequel ledit pot de miel de dispositif de réseau comportemental (43) est configuré pour transmettre des données virtuelles, simulées par celui-ci, audit routeur (22) ; et
d) des moyens pour sonder activement ledit routeur en utilisant lesdites données virtuelles de manière à être un trafic de données auto-généré et de faible volume spécifique, de manière que chaque élément de données simulé dans lesdites données virtuelles soit identifiable, et qu'une réaction de routeur prévue en réponse à l'élément de données simulé et en réponse à ladite configuration de routeur mise à jour obtenue est comparée avec le comportement de routeur surveillé pour déterminer une occurrence d'un événement d'anomalie.

2. Système pot de miel basé sur routeur, selon la revendication 1, dans lequel le comportement prévu d'un routeur avec une configuration donnée est obtenu, sur la base d'une ontologie de dispositif de réseau prédéfinie qui représente un comportement ou des activités ou des capacités possibles d'un composant de réseau.

3. Système pot de miel basé sur routeur, selon la revendication 1, dans lequel le pot de miel de dispositif de réseau comportemental en fonctionnement s'interface avec le routeur par les canaux suivants :
un canal d'interface de configuration (41) pour recevoir la configuration de routeur instantanée ;
un canal d'échantillonnage de données (46) pour échantillonner des données de commande, dirigé vers ledit routeur ;
un canal de surveillance (47) pour extraire des données concernant le comportement du routeur en réponse aux données entrantes échantillonnées ;
un canal de dérivation (48) à travers lequel toutes les données de commande normalement dirigées vers ledit routeur sont dérivées sur ledit pot de miel de dispositif de réseau comportemental, s'il est déterminé que le comportement du routeur est incompatible avec le comportement de routeur prévu pour la configuration de routeur instantanée.

4. Système pot de miel basé sur routeur, selon la revendication 3, dans lequel le canal d'interface de configuration (41), le canal d'échantillonnage de données (46), le canal de surveillance (47) et le canal de dérivation (48) sont des canaux logiques.

5. Système pot de miel basé sur routeur, selon la revendication 1, comprenant en outre : un système de gestion d'actifs de réseau (52) pour transmettre des changements de configuration du routeur au pot de miel de dispositif de réseau comportemental en utilisant des justificatifs légitimes provenant d'un Active Directory ;
un composant de surveillance de confiance (57) pour :
surveiller le comportement du routeur ;
comparer le comportement du routeur avec le comportement de routeur prévu pour la configuration de routeur instantanée, en réponse à des données entrantes échantillonnées.

6. Système pot de miel basé sur routeur, selon la revendication 1, dans lequel un serveur externe est utilisé pour comparer le comportement de routeur surveillé avec le comportement de routeur prévu, de manière que le pot de miel de dispositif de réseau comportemental reçoive des données de commande via le canal de dérivation après qu'une anomalie a été détectée.

7. Système pot de miel basé sur routeur, selon la revendication 1, dans lequel les moyens pour sonder activement ledit routeur en utilisant lesdites données virtuelles est un module de performance (14) du pot de miel de dispositif de réseau comportemental (43) qui est également adapté pour générer les données virtuelles.

8. Système pot de miel basé sur routeur, selon la revendication 1, dans lequel les moyens pour sonder activement ledit routeur en utilisant lesdites données virtuelles comprennent des moyens pour sonder par des défis prédéfinis liés au trafic de données auto-généré et de faible volume spécifique.

9. Système pot de miel basé sur routeur, selon la revendication 8, dans lequel des types de données de sondage ou de challenge constituant le trafic de données auto-généré et de faible volume spécifique sont sélectionnés à partir du groupe composé de paquets ICMP, de requêtes de DNS, de paquets VoIP, de sollicitation de découverte de voisin, de courriel et de données de couche d'application.
